# EUROPEAN PATENT APPLICATION

(11) **EP 4 635 389 A1**
(43) Date of publication of application: **22.10.2025**
(21) Application number: 23913936.3
(22) Date of filing: 03.01.2023
(51) Int. Cl.: A47L 11/24, A47L 11/40

(54) **CONTROL METHOD AND APPARATUS FOR FLOOR SWEEPING ROBOT, AND FLOOR SWEEPING ROBOT, SYSTEM AND STORAGE MEDIUM**

(71) Applicant: SZ Shanzhi Technology Co., Ltd., Shenzhen, Guangdong 518000 (CN)
(72) Inventor: ZOU, Ting, Shenzhen, Guangdong 518000 (CN); LI, Lin, Shenzhen, Guangdong 518000 (CN); GAO, Jinjun, Shenzhen, Guangdong 518000 (CN); SHI, Biying, Shenzhen, Guangdong 518000 (CN); LIU, Ang, Shenzhen, Guangdong 518000 (CN)
(74) Representative: Appelt, Christian W.
(86) International application number: PCT/CN2023/070202
(87) International publication number: WO 2024/145776

(57) **Abstract**

A robot vacuum cleaner control method and device, a robot vacuum cleaner, a control system, and a computer-readable storage medium are provided. The method comprises: determining semantic information of different objects located on a movement path; determining different safe execution distances for the different objects based on the semantic information of the different objects; and controlling the robot vacuum cleaner to execute a cleaning task and/or obstacle avoidance task more flexibly, intelligently and safely according to the different safe execution distances of the different objects.

## Description

### Technical Field

The present application relates to the technical field of robot vacuum cleaners, in particular to a control method and device of a robot vacuum cleaner, a robot vacuum cleaner, a system, and a storage medium.

### Background Art

With the rapid development of technology, more and more smart household appliances have entered homes, greatly enhancing people's comfort and convenience in life. Among them, the robot vacuum cleaner, as a particularly representative example, is increasingly favored by people. A robot vacuum cleaner is a type of smart home appliance that, with a certain level of artificial intelligence, can automatically perform floor cleaning tasks indoors. Generally speaking, robots that complete cleaning, vacuuming, and mopping tasks are collectively referred to as robot vacuum cleaners.

To further promote the widespread use of robot vacuum cleaners, the control device must enable them to clean more flexibly and intelligently. How to control a robot vacuum cleaner to perform cleaning tasks more flexibly and intelligently is a pressing issue that needs to be addressed at present.

### Summary of the Invention

In light of the foregoing, an object of the present application is to provide a control method and device of a robot vacuum cleaner, a robot vacuum cleaner, a system, and a storage medium.

In a first aspect, some embodiments of the present application provide a robot vacuum cleaner controlling method applied to a robot vacuum cleaner, the method comprises: determining semantic information of different objects located on a movement path; determining different safe execution distances for the different objects based on the semantic information; and controlling the robot vacuum cleaner to perform at least one of a cleaning task or an obstacle avoidance task based on the different safe execution distances of the different objects.

In some embodiments, the safe distances of the robot vacuum cleaner from different objects are flexibly determined according to the semantic information of different objects. This can not only prevent the robot vacuum cleaner from colliding with different objects but also clean all cleanable positions as much as possible, achieving more flexible, intelligent, and safe execution of cleaning tasks and/or obstacle avoidance tasks.

In a second aspect, some embodiments of the present application provide a robot vacuum cleaner controlling method applied to a terminal, the method comprises: displaying an environment map on an interactive interface; in response to a first touch operation received on the interactive interface, generating a first touch trajectory; determining an area to be cleaned in an environment based on the first touch trajectory and the environment map; and controlling the robot vacuum cleaner to perform a cleaning task in the environment based on the area to be cleaned.

In some embodiments, users can perform the first touch operation according to their own cleaning needs, flexibly selecting the areas they want to clean, enabling precise control of the robot vacuum cleaner for targeted cleaning. This allows the robot vacuum cleaner to flexibly and intelligently clean the areas desired by the user, improving the cleaning efficiency of the robot vacuum cleaner.

In a third aspect, some embodiments of the present application provide a control device for a robot vacuum cleaner, the control device comprises: one or more processors; a memory for storing executable instructions for the processor, where the one or more processors, individually or collectively, execute the executable instructions to perform the method according to the first aspect.

In a fourth aspect, some embodiments of the present application provide a robot vacuum cleaner, the robot vacuum cleaner comprises: a body; a power system, disposed within the body, configured to provide power to the robot vacuum cleaner; and a control device as set forth in the third aspect, disposed within the body.

In a fifth aspect, some embodiments of the present application provide a control system, the control system comprises the robot vacuum cleaner as set forth in the fourth aspect and a terminal, where the terminal is configured to execute the method according to the second aspect.

In a sixth aspect, some embodiments of the present application provide a computer-readable storage medium, the computer-readable storage medium stores executable instructions, and when the executable instructions are executed by a processor, the method according to the first aspect or the second aspect is implemented.

The embodiments of the present application are beneficial in enabling the robot vacuum cleaner to perform cleaning tasks more flexibly and intelligently. The embodiments and their beneficial effects will be further elaborated on in the following text.

### Brief Description of the Drawings

To more clearly illustrate the technical solutions in the embodiments of this application, a brief introduction to the drawings required for the description of the embodiments is provided below. Obviously, the drawings described below are merely some embodiments of this application. For a person of ordinary skill in the art, other drawings can also be obtained based on these drawings without exerting creative effort.
FIG. 1 is a schematic structural diagram of a control system provided by some embodiments of this application;
FIG. 2 is a schematic diagram of an environment map provided by some embodiments of this application;
FIG. 3 is a structural schematic diagram of a robot vacuum cleaner provided by some embodiments of this application;
FIG. 4 is a flowchart schematic diagram of a control method for a robot vacuum cleaner provided by some embodiments of this application;
FIG. 5A is a schematic diagram of a user performing a smearing operation on a displayed environment map provided by some embodiments of this application;
FIG. 5B is a schematic diagram of a user performing a zoom-in operation on a displayed environment map provided by some embodiments of this application;
FIG. 5C is a schematic diagram of a user performing a zoom-out operation on a displayed environment map provided by some embodiments of this application;
FIG. 6A and FIG. 6B are different schematic diagrams of a user's smearing lines and fitted closed shapes provided by some embodiments of this application;
FIG. 7 is a flowchart schematic diagram of another control method for a robot vacuum cleaner provided by some embodiments of this application;
FIG. 8 is a schematic diagram of a robot vacuum cleaner performing cleaning according to a reciprocating cleaning strategy provided by some embodiments of this application;
FIG. 9 is a schematic diagram of a robot vacuum cleaner equipped with a mechanical switch provided by some embodiments of this application;
FIG. 10 is a schematic diagram of a robot vacuum cleaner equipped with an airspeed sensor provided by some embodiments of this application; and
FIG. 11 is a structural schematic diagram of a control device for a robot vacuum cleaner provided by some embodiments of this application.

### Description of the Embodiments

The following will provide a description of the technical solutions in the embodiments of this application with reference to the accompanying drawings thereof. Obviously, the described embodiments are only a part of the embodiments of this application, not all of them. Based on the embodiments provided in this application, all other embodiments obtained by a person of ordinary skill in the art without creative efforts shall fall within the scope of protection of this application.

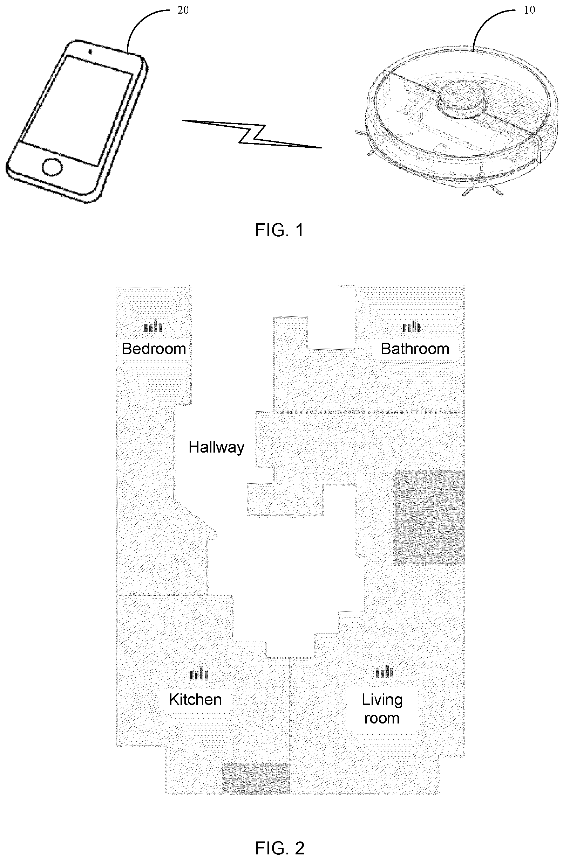

With reference to FIG.1, which provides a structural schematic diagram of a control system according to some embodiments, a control system may include a robot vacuum cleaner 10 and a terminal 20. The robot vacuum cleaner 10 and the terminal 20 are communicatively connected. A user can control the robot vacuum cleaner 10 through the terminal 20 to perform cleaning tasks, but it is not limited to this. For example, a user can also control the robot vacuum cleaner 10 to return to the base station, or control the robot vacuum cleaner to move to a designated location without cleaning, etc. The embodiments impose no restrictions on this.

Exemplarily, a base station of the robot vacuum cleaner may include a charging dock. After the robot vacuum cleaner 10 returns to the base station, it can automatically connect to the charging dock via a magnetic structure, thereby achieving automatic charging.

Exemplarily, the base station of the robot vacuum cleaner may have the function of cleaning the robot vacuum cleaner. For instance, the robot vacuum cleaner includes at least one of the following structures: a brush for sweeping the floor, a mop for cleaning the floor, a garbage collecting box for collecting garbage from the floor, and a water tank for cleaning the mop. The base station may include a cleaning mechanism for cleaning at least one of the aforementioned structures of the robot vacuum cleaner. After the robot vacuum cleaner returns to the base station, the base station can use the cleaning mechanism to clean at least one of the aforementioned structures of the robot vacuum cleaner. For example, the base station can use the cleaning mechanism to remove garbage from the garbage collecting box or dirty water from the water tank; alternatively, the base station can use the cleaning mechanism to clean the mop or brush of the robot vacuum cleaner.

Exemplarily, in the case where the robot vacuum cleaner includes a water tank, the base station may also have the function of adding water to the water tank; in the case where the robot vacuum cleaner includes a mop, the base station may also have the function of automatically drying the mop.

The terminal 20 can provide an interactive interface, which can display a pre-constructed environment map. As shown in FIG. 2, an environment map of a certain indoor environment is illustrated. A user can designate an area to be cleaned on the environment map, and then the terminal 20 can control the robot vacuum cleaner 10 to clean the designated area based on the user-specified area to be cleaned. The robot vacuum cleaner 10 can adopt at least one of the following cleaning methods: brushing, vacuuming, and mopping. During the cleaning process, the robot vacuum cleaner 10 sucks floor debris/garbage into its own garbage collecting box or performs wet cleaning of wet dirt, thereby completing the function of cleaning ground dirt.

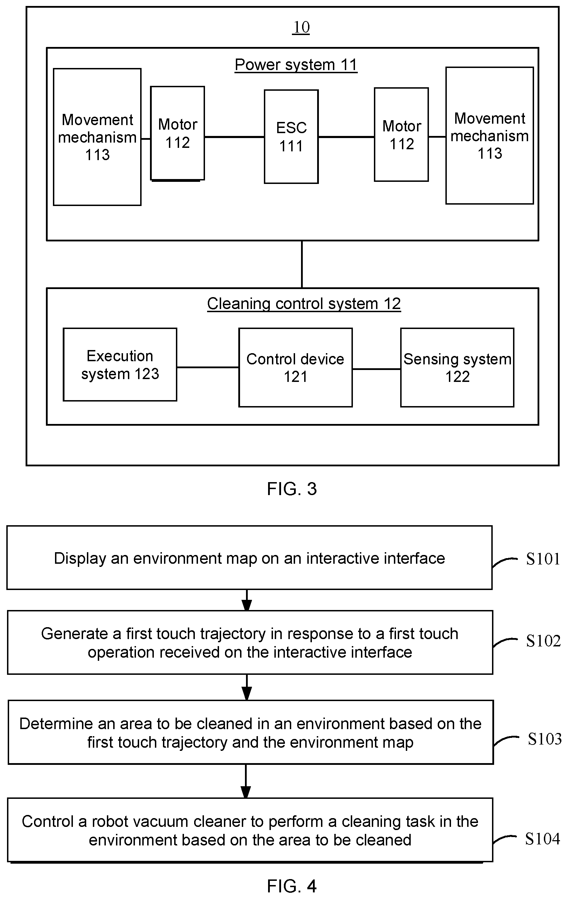

Exemplarily, With reference to FIG. 3, the robot vacuum cleaner 10 includes a power system 11 and a cleaning control system 12.

The power system 11 is used to provide power for the robot vacuum cleaner 10. For example, the power system 11 may include one or more electronic speed controllers 111 (abbreviated as ESC), one or more movement mechanisms 113, and one or more motors 112 corresponding to the one or more movement mechanisms 113. The motor 112 is connected between the electronic speed controller 111 and the movement mechanism 113. The electronic speed controller 111 is used to receive a drive signal generated by the cleaning control system 12 and provide a drive current to the motor 112 based on the drive signal to control the speed of the motor 112. The motor 112 is used to drive the movement mechanism 113, thereby providing power for the movement of the robot vacuum cleaner 10, which enables the robot vacuum cleaner 10 to achieve motion with one or more degrees of freedom. It should be understood that the motor 112 can be a DC motor or an AC motor. Additionally, the motor 112 can be a brushless motor or a brushed motor.

The cleaning control system 12 may include a control device 121, a sensing system 122, and an execution system 123. The sensing system 122 is used to measure the attitude information of the robot vacuum cleaner 10, i.e., the position and state information of the robot vacuum cleaner 10 in space, such as three-dimensional position, three-dimensional angle, three-dimensional velocity, three-dimensional acceleration, and three-dimensional angular velocity, etc.; and/or, the sensing system is also used to perceive the environment around the robot vacuum cleaner 10 to enable obstacle avoidance or to construct an environment map. The sensing system may include, for example, at least one of the following: a gyroscope, an ultrasonic sensor, an electronic compass, an inertial measurement unit (IMU), a vision sensor, a LiDAR, an infrared sensor, a global navigation satellite system, a barometer, a collision sensor, and a drop sensor. For instance, the global navigation satellite system may be the Global Positioning System (GPS). The control device 121 is used to control the robot vacuum cleaner 10 to perform cleaning tasks and/or obstacle avoidance tasks. For example, it can control the movement of the robot vacuum cleaner 10 based on the attitude information measured by the sensing system 122. It should be understood that the control device 121 can control the robot vacuum cleaner 10 according to pre-programmed instructions or by responding to one or more control signals from the terminal 20.

The execution system 123 includes, but is not limited to, at least one of the following structures: a dry cleaning component (e.g., a brush for sweeping the floor, a garbage collecting box for collecting garbage from the floor, etc.), a vacuuming component (e.g., a suction mechanism such as a fan or blower located near a suction port), and a wet cleaning component (e.g., a mop for cleaning the floor and a water tank for washing the mop, etc.). Among them, the brushes of the robot vacuum cleaner are divided into two types: a roller brush and a side brush. The roller brush is located at the bottom of the robot vacuum cleaner, generally in front of the suction port, and its main function is to sweep up dust from the bottom of the robot vacuum cleaner, allowing the dust to enter the garbage collecting box through the suction port. The side brush is located at the edge of the robot vacuum cleaner's body, typically extending 5 to 8 centimeters beyond the body, and its function is to sweep out dust from walls or corners that the robot vacuum cleaner cannot reach. The mop includes two types: a flat mop and a rotating mop. The flat mop performs unidirectional scraping cleaning, while the rotating mop cleans by rotating two mops inward.

The aforementioned cleaning tasks may include sweeping tasks and/or mopping tasks. A sweeping task refers to the task of cleaning the floor using a brush and/or a vacuuming component; a mopping task refers to the task of mopping the floor using a mop.

When the aforementioned sensing system 122 detects that the object to be cleaned is liquid dirt, the control device 121 can control the robot vacuum cleaner to execute a mopping task. For example, the control device can control the mop to wipe/mop the liquid dirt. Before wiping/mopping, if the sensing system 122 detects that the mop is relatively dry, the control device 121 can control the water in the water tank to add water to the mop; during or after the wiping/mopping process, the control device 121 can control using the water in the water tank to clean the mop. For instance, the water tank may include two independent containers: one container for holding clean water and another container for holding the dirty water after cleaning the mop.

When the aforementioned sensing system 122 detects that the object to be cleaned is dry dirt such as dust or hair, the terminal 20 can control the robot vacuum cleaner to execute a sweeping task. For example, the control device can control the brush to perform sweeping or control the vacuuming component to perform a vacuuming operation. For instance, a suction mechanism in the vacuuming component can suck dry dirt such as dust or hair into the garbage collecting box through the suction port.

Exemplarily, the terminal 20 includes, but is not limited to, a smartphone/mobile phone, tablet computer, personal digital assistant (PDA), laptop computer, desktop computer, media content player, video game station/system, virtual reality system, augmented reality system, wearable device (e.g., watch, glasses, gloves, headgear (such as hats, helmets, virtual reality headsets, augmented reality headsets, head-mounted devices (HMD), headbands), pendants, armbands, leg rings, shoes, vests), remote control, or any other type of device.

It should be noted that the terminal 20 can be located far from the robot vacuum cleaner 10 to achieve remote control of the robot vacuum cleaner 10. Alternatively, the terminal 20 can also be fixed or detachably mounted on the robot vacuum cleaner 10, and the specific arrangement can be set as needed.

It should be understood that the naming of the control system and the various components of the robot vacuum cleaner mentioned above is solely for identification purposes and should not be construed as a limitation on the embodiments of this application.

In certain embodiments, robot vacuum cleaners can also communicate with each other to collaboratively clean the same area.

To further broaden the application of the robot vacuum cleaner, the control device should control it to perform cleaning more flexibly and intelligently. How to control the robot vacuum cleaner to clean more flexibly and intelligently is currently an urgent problem that needs to be addressed.

A control method in the related art involves dividing the indoor environment into functional zones, such as a bedroom, kitchen, living room, or bathroom. Users can select the area to be cleaned based on their actual needs, such as choosing the bedroom or kitchen. However, this method of selecting areas offers low flexibility, as users sometimes do not want to clean an entire room, failing to meet their need for fine-grained control.

To address the above issue, some embodiments herein provide a control method for a robot vacuum cleaner, enabling users to customize an area to be cleaned through a first touch operation on the terminal, thereby allowing the robot vacuum cleaner to clean flexibly and intelligently according to the user's needs.

With reference to FIG. 4, which illustrates a flowchart schematic diagram of a control method for a robot vacuum cleaner, applied to the terminal, the method includes:
In step S101, display an environment map on an interactive interface.
In step S102, generate a first touch trajectory in response to a first touch operation received on the interactive interface.
In step S103, determine an area to be cleaned in an environment based on the first touch trajectory and the environment map.
In step S104, control a robot vacuum cleaner to perform a cleaning task in the environment based on the area to be cleaned.

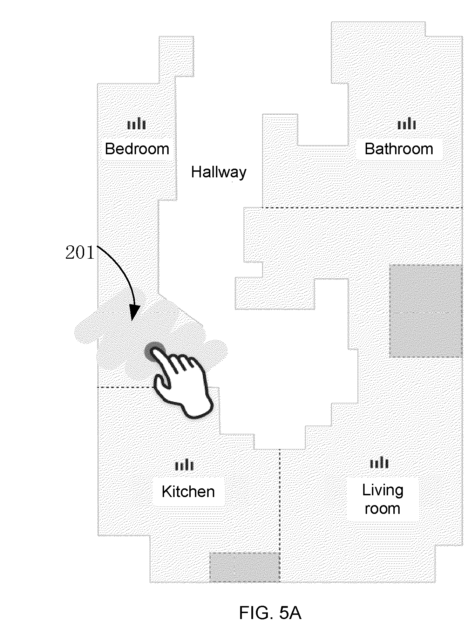

In some embodiments, with reference to FIG. 2, on the interactive interface displaying an environment map, a user can perform a first touch operation based on the cleaning needs. The first touch operation may include at least one of the following: a smearing operation, a pressing operation, or a sliding operation in the form of a closed sliding trajectory, allowing the user to flexibly select a desired cleaning area. For example, as shown in FIG. 5A, a schematic diagram illustrates a user performing a smearing operation on the interactive interface displaying the environment map. This makes the setting of the area to be cleaned more flexible and intuitive, while also adding an element of fun and enhancing the user experience.

Next, the terminal can respond to the first touch operation received on the interactive interface by generating a first touch trajectory, and subsequently determine the area to be cleaned in the environment based on the first touch trajectory and the environment map. Finally, the terminal controls the robot vacuum cleaner to perform a cleaning task in the environment according to the determined area to be cleaned.

Through the first touch operation, the user can flexibly select the area they want to clean, enabling precise control of the robot vacuum cleaner for targeted cleaning. This allows the robot vacuum cleaner to flexibly and intelligently clean the area desired by the user, improving the cleaning efficiency of the robot vacuum cleaner.

In one example, with reference to FIG. 5A, the first touch operation is a smearing operation. The smearing operation can be a single-finger touch on the interactive interface followed by a smearing action on the interface. For instance, FIG. 5A shows smear lines displayed on the interactive interface due to the user's smearing operation. Alternatively, it can involve other touch methods (such as a two-finger touch), and the embodiments herein impose no restrictions on this. In another example, the smearing operation can also be performed on the interactive interface using tools such as a mouse or stylus, and the embodiments herein impose no restrictions on this either.

For example, the interactive interface may also display a reset control. If the user is dissatisfied with the area covered by the smear lines displayed on the interactive interface, they can tap to trigger the reset control. In response to the reset control being triggered, the terminal can clear the smear lines displayed on the interactive interface from the user's previous smearing operation, allowing the user to perform the smearing operation again.

For example, the environmental map displayed on the interactive map can be zoomed in or out to assist the user in designating the area to be cleaned.

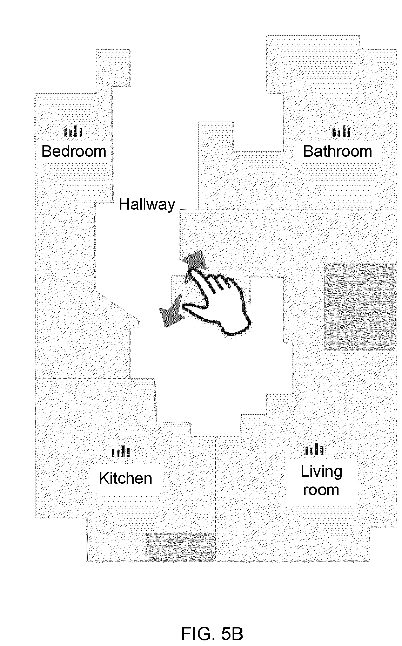

In some embodiments, considering that in certain scenarios the area the user wants to clean is very small, to improve the accuracy of determining the area to be cleaned, the terminal can respond to the user's zoom-in operation by displaying an enlarged environmental map on the interactive interface. The user can perform a smearing operation on the enlarged environmental map to precisely designate the area to be cleaned. The zoom-in operation can be, as shown in FIG. 5B, an action where the user touches the interactive interface with two fingers and spreads them apart; it can also be an action where the user clicks on an enlarge control displayed on the interactive interface. When the enlarged environmental map is displayed on the interactive interface, the terminal can also respond to the user's restore operation by displaying the environmental map in its default size on the interactive interface. For example, the user's restore operation can be a two-finger tap or double-tap on the interactive interface, though it is not limited to this.

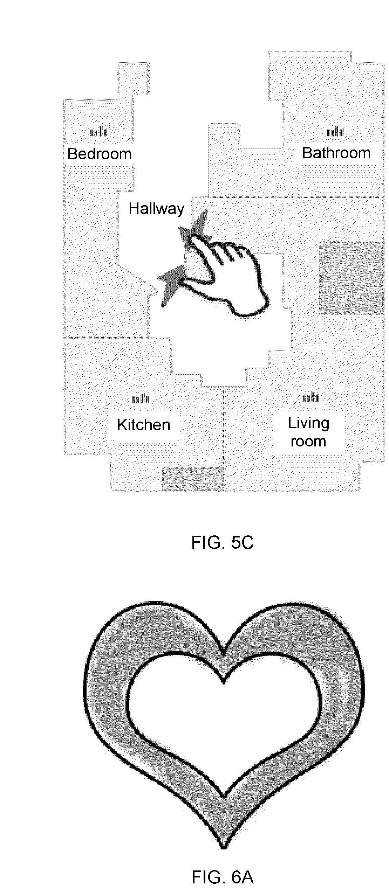

In some embodiments, considering that in certain scenarios the area the user wants to clean is very large, to reduce the steps of the user's smearing operation, the terminal can respond to the user's zoom-out operation by displaying a reduced environmental map on the interactive interface. The user can perform a smearing operation on the reduced environmental map to quickly designate the area to be cleaned, thereby improving smearing efficiency. The zoom-out operation can be, as shown in FIG. 5C, an action where the user touches the interactive interface with two fingers and pinches them together; it can also be an action where the user clicks on a shrink control displayed on the interactive interface. When the reduced environmental map is displayed on the interactive interface, the terminal can also respond to the user's restore operation by displaying the environmental map in its default size on the interactive interface. For example, the user's restore operation can be a two-finger tap or double-tap on the interactive interface, though it is not limited to this.

In some embodiments, when determining the area to be cleaned in the environment, the terminal can determine the area to be cleaned in the environment based on the region covered by several circles centered on the first touch trajectory (hereinafter exemplified as a smearing trajectory) within the environmental map. As shown in FIG. 5A, FIG. 5A illustrates smear lines 201 displayed on the interactive interface due to the user's smearing operation. These smear lines 201 are composed of several circles centered on the smearing trajectory. The terminal can determine the area to be cleaned in the environment based on the region covered by these smear lines 201 in the environmental map, thereby achieving precise determination of the area to be cleaned according to the user's needs.

The radius of the circles can be determined based on a first instruction. For example, the first instruction may be a user instruction, meaning the user can customize the radius of the circles (or, in other words, customize the thickness of the smear lines 201 as shown in FIG. 5A) according to actual needs. Alternatively, the first instruction can be a standard circle radius corresponding to the terminal.

Furthermore, considering that when a user attempts to smear a larger area, manual operation may result in jagged edges in the region covered by the several circles, meaning the area covered by these circles may be irregular, potentially increasing the difficulty and complexity of subsequent path planning. Therefore, to facilitate the subsequent path planning process, after generating the smearing trajectory, the terminal can obtain several circles centered on the smearing trajectory and perform outer edge fitting on these circles to obtain a closed shape. Then, based on the region covered by this closed shape in the environmental map, the terminal determines the area to be cleaned in the environment. This embodiment effectively reduces the difficulty and complexity of subsequent path planning and improves path planning efficiency by performing a certain degree of fitting on the several circles.

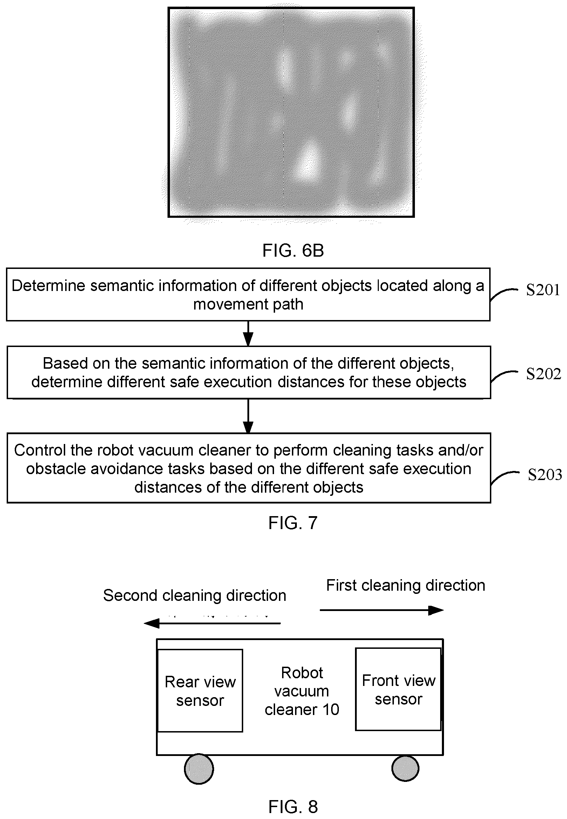

The fitting process involves determining a smooth closed shape that most closely matches the several circles. FIG. 6A and 6B provide schematic diagrams of the closed shape after fitting, where the gray portion represents the smear lines formed by several circles due to the user's smearing operation, and the closed shape composed of black lines represents the result after fitting. It can be understood that the purpose of fitting is to smooth out uneven parts, thereby reducing the complexity of path planning. The closed shape obtained through fitting does not differ significantly from the shape formed by the user's smear lines.

In some embodiments, to reduce the steps of the user's smearing operation, when the generated smearing trajectory is a closed trajectory or nearly a closed trajectory, the interior of the closed trajectory can be automatically filled. Then, based on the region covered by the filled shape in the environmental map, the area to be cleaned in the environment is determined.

In one example, after multiple areas to be cleaned have been determined, the user can also specify the cleaning order of these multiple areas to be cleaned in the interactive interface according to actual needs, and this embodiment imposes no restrictions on this. After determining the area to be cleaned based on the user's smearing operation, the terminal can control the robot vacuum cleaner to perform cleaning tasks in the environment based on the area to be cleaned. For example, the terminal can generate information indicating the area to be cleaned, then send this information to the robot vacuum cleaner. The robot vacuum cleaner can plan its movement path based on the area to be cleaned indicated by this information and subsequently execute the cleaning task according to the planned movement path.

For example, when the terminal controls the robot vacuum cleaner to perform the cleaning task in the environment based on the area to be cleaned, this may include: obtaining the current position of the robot vacuum cleaner; determining a movement path based on the current position of the robot vacuum cleaner and the area to be cleaned; and controlling the robot vacuum cleaner to move along this movement path. In this embodiment, the robot vacuum cleaner is not directly located at the area to be cleaned, so it is necessary to determine its current position to at least plan a movement path from the current position to the area to be cleaned.

For example, the movement path includes at least: a first movement path, which represents the path from the current position of the mobile robot to the area to be cleaned; and/or a second movement path, which represents the path of the robot vacuum cleaner while performing the cleaning task within the area to be cleaned. The first movement path can further be understood as the movement path from the current position of the robot vacuum cleaner to a first position in the area to be cleaned. For instance, the current position of the robot vacuum cleaner can be understood as the location of the base station or the position where the robot vacuum cleaner is while performing other tasks, and the first position is the starting cleaning position of the area to be cleaned. The second movement path can further be understood as the movement path from the first position to a second position of the robot vacuum cleaner. For example, the first position is the starting cleaning position of the area to be cleaned, and the second position is the final cleaning position of the area to be cleaned.

In some implementations, the area to be cleaned can be customized, and the starting cleaning position and final cleaning position can be marked on the terminal through the first touch operation, such as by loading a file. These markings include, but are not limited to: triangles, dots, circles, crosshairs, target markers, etc. The starting cleaning position and final cleaning position can be set through user operations, such as the user clicking on two locations on a semantic map displayed on the terminal's interactive interface, or inputting one or more coordinates. Alternatively, the starting cleaning position and final cleaning position can be automatically set by the robot vacuum cleaner, such as using the starting coordinate when it begins moving as the starting cleaning position and the ending coordinate when the robot vacuum cleaner completes the cleaning task as the final cleaning position.

For example, the second movement path can be implemented by first planning along the edges and then using a bow-shaped (zigzag) pattern. Specifically, the robot vacuum cleaner is first controlled to plan a path along the edges of the area to be cleaned, determining the overall shape of the area to be cleaned. Then, based on the starting cleaning position and final cleaning position set by the user, a bow-shaped traversal is completed at preset intervals to generate the second movement path for areas to be cleaned of different shapes.

For example, controlling the robot vacuum cleaner to move along the movement path includes: under a first condition, controlling the robot vacuum cleaner to move from its current position to the area to be cleaned via the first movement path; or, under a second condition, prioritizing control of the robot vacuum cleaner to move from its current position to the area to be cleaned via the first movement path; or, under a third condition, prioritizing control of the robot vacuum cleaner to execute tasks according to the latest received control instructions. For instance, the first condition could be: the robot vacuum cleaner currently has no tasks to perform, and its relevant parameters allow it to execute a cleaning task (e.g., it is in a standby state with sufficient battery power). Under this first condition, upon receiving information about the area to be cleaned as indicated by the user, the robot vacuum cleaner can directly move from its current position to the area to be cleaned via the first movement path. The second condition could be: the robot vacuum cleaner is currently performing other tasks, such as mapping other areas, cleaning other areas, or operating in other regions. Under this second condition, upon receiving information about the area to be cleaned as indicated by the user, the robot vacuum cleaner will prioritize moving from its current position to the area to be cleaned via the first movement path. After cleaning the area to be cleaned using the second movement path, it will return to its current position to resume the other tasks. The third condition could be: the robot vacuum cleaner is currently performing basic tasks, such as charging due to low battery, having its cleaning components cleaned by the base station, or being refilled with water/cleaning solution. Under this third condition, upon receiving information about the area to be cleaned as indicated by the user, the robot vacuum cleaner will continue executing its current basic task. Only after completing the current basic task will it move from its current position to the area to be cleaned via the first movement path. It is understandable that, in some implementations, if the charging task, the task of having its cleaning components cleaned by the base station, or the task of being refilled with water/cleaning solution under the third condition is about to be completed-such that the robot vacuum cleaner's relevant parameters become suitable for performing tasks in the area to be cleaned, thus the third condition can transition into the first condition.

The above implementation can effectively reduce the control difficulty of the robot vacuum cleaner and allow it to perform corresponding tasks according to the user's preferences, significantly enhancing the user experience.

For example, when cleaning the area to be cleaned, the terminal determines the semantic information of different objects located along the movement path; based on the semantic information of these different objects, it determines the different safe execution distances for these objects; and controls the robot vacuum cleaner to perform cleaning tasks and/or obstacle avoidance tasks according to the different safe execution distances of the different objects. The specific implementation of this embodiment will be described in detail below.

In related technologies, considering that the robot vacuum cleaner may encounter different objects in the area to be cleaned while performing cleaning tasks, there is a risk of collision with these objects during the cleaning process, which could potentially cause damage to the robot vacuum cleaner or the objects.

To address the above issue, the embodiment of this application provides a control method for the robot vacuum cleaner, enabling it to perform cleaning tasks and/or obstacle avoidance tasks based on the different safe execution distances of various objects. This approach protects both the robot vacuum cleaner and the objects during the cleaning process, achieving a more flexible, intelligent, and safe execution of cleaning and/or obstacle avoidance tasks.

With reference to FIG. 7, which is a schematic flowchart of a control method for a robot vacuum cleaner provided by some embodiments of this application, the method is applied to a robot vacuum cleaner and may include the following steps:
In step S201, determine semantic information of different objects located along a movement path.
In step S202, based on the semantic information of the different objects, determine different safe execution distances for these objects.
In step S203, control the robot vacuum cleaner to perform cleaning tasks and/or obstacle avoidance tasks based on the different safe execution distances of the different objects.

In some embodiments, flexibly determining the different safe distances of the robot vacuum cleaner from various objects based on their semantic information can both prevent the robot vacuum cleaner from colliding with different objects and ensure that all cleanable positions are cleaned as thoroughly as possible. This enables a more flexible, intelligent, and safe execution of cleaning tasks and/or obstacle avoidance tasks.

In some embodiments, before determining the semantic information of different objects located along the movement path, the robot vacuum cleaner can receive information about the area to be cleaned sent by the terminal. Then, based on the area to be cleaned indicated by this information, it plans the movement path of the robot vacuum cleaner. The area to be cleaned can be determined according to the first touch trajectory described in the above embodiments; alternatively, it can be determined in other ways, such as a default cleaning area (e.g., the entire indoor environment), or it can be determined based on a selected region framed in the environmental map. This embodiment imposes no restrictions on this.

Semantic information refers to information with specific meaning that can eliminate uncertainty about objects. The semantic information of different objects can distinguish the object types of these different objects.

In some embodiments, with reference to FIG. 3, the robot vacuum cleaner includes a sensing system, which can be used to perceive the surrounding environment of the robot vacuum cleaner. For example, the sensing system includes, but is not limited to, visual sensors, LiDAR, ultrasonic sensors, or infrared sensors. While the robot vacuum cleaner performs cleaning tasks along the movement path, it can acquire perception data collected by the sensing system along the movement path and then identify the semantic information of different objects located on the movement path based on this perception data.

The perception/sensing data includes, but is not limited to, at least one type of data such as images, point clouds, ultrasonic signals, or infrared signals. Taking images as an example of perception data, the robot vacuum cleaner can use a pre-trained semantic segmentation model to perform semantic segmentation on the images, obtaining the semantic information of different objects located along the movement path. Semantic segmentation is the process of classifying each pixel in an image, grouping the same objects into one category while assigning different objects to different categories.

In some embodiments, the robot vacuum cleaner can pre-store an environmental map of the environment. For example, the environmental map includes a semantic map, which carries semantic information about different objects in the map. Illustratively, the semantic map can be a pixel-based image (e.g., in tif/tfw format), where each pixel corresponds to a real-world coordinate position. At the same time, the pixel stores information representing the semantic information corresponding to that position, indicating the type of object associated with that location. To facilitate the use of the semantic map, the robot vacuum cleaner can group multiple adjacent pixels with the same semantic meaning into a single image region. Each image region has its corresponding semantic information. For example, please refer to FIG. 2. The environmental map shown in FIG. 2 describes the semantic information corresponding to different image regions: the semantic information of the image region in the upper left corner is "bedroom," the semantic information of the image region in the upper right corner is "bathroom," the semantic information of the image region in the lower left corner is "kitchen," the semantic information of the image region in the lower right corner is "living room," and the semantic information of the image region in the middle is "hallway."

**The** acquisition of the semantic map can involve various methods, and the source of the semantic map is not limited. For example, the semantic map may come from the robot vacuum cleaner's mapping and recognition process, manual delineation by the user, or downloads from a third party.

Exemplarily, a semantic map can be pre-constructed by a robot vacuum cleaner. For instance, after the robot vacuum cleaner enters a new environment, it can move within the new environment and perceive the surroundings based on its built-in sensing system to obtain perception data during movement. **The** robot vacuum cleaner can acquire semantic information of the environment, such as furniture, walls, doors, or hallways, based on the perception data, thereby constructing a semantic map of the new environment.

Exemplarily, a semantic map can also be input by a user into the robot vacuum cleaner or a terminal that is communicatively connected to the robot vacuum cleaner. In one example, a user can manually define a semantic map, such as displaying an environmental map carrying semantic information on an interactive interface of the terminal. **The** user can edit the semantic information in the environmental map as needed, such as modifying the semantic information of various locations in the map and marking semantic information such as walls, sofas, stairs, carpets, etc., thereby obtaining a semantic map.

Exemplarily, a semantic map can also be automatically downloaded from a third party by the robot vacuum cleaner or a terminal communicatively connected to the robot vacuum cleaner. The semantic map can be constructed by third-party devices.

The semantic map can be stored in the local storage space of the robot vacuum cleaner or a terminal communicatively connected to the robot vacuum cleaner and can be automatically read from the storage space after the robot vacuum cleaner is powered on. During the execution of a cleaning task along a movement path, the robot vacuum cleaner can identify the semantic information of different objects located on the movement path from the pre-stored semantic map based on its current position.

In some embodiments, after determining the semantic information of different objects on the movement path, the robot vacuum cleaner can determine different safe execution distances for these objects based on their semantic information. In one possible implementation, the robot vacuum cleaner pre-stores a first mapping relationship, which indicates different safe execution distances corresponding to different objects with semantic information. The robot vacuum cleaner can determine the different safe execution distances of the objects from the pre-stored first mapping relationship based on their semantic information, thereby enabling flexible, intelligent, and safe execution of cleaning tasks and/or obstacle avoidance tasks.

The granularity of the semantic information classification is adjustable. Exemplarily, the granularity can be increased as needed, such as classifying different objects based on their semantic information into objects to be cleaned and obstacles. The different objects include obstacles and objects to be cleaned. The safe execution distance for objects to be cleaned is 0, while the safe execution distance for obstacles is greater than or equal to 0.

For example, the granularity can be adjusted according to actual needs. For instance, based on the semantic information of different obstacles, they can be categorized into soft material obstacles, ordinary material obstacles, and fragile material obstacles. The safe execution distance for soft material obstacles is less than that for ordinary material obstacles, and the safe execution distance for ordinary material obstacles is less than that for fragile material obstacles.

As an example, different obstacles include soft material obstacles, ordinary material obstacles, and fragile material obstacles. For soft material obstacles, cleaning can be done in close proximity since it neither harms the robot vacuum cleaner nor the soft material obstacle itself; thus, the safe execution distance for soft material obstacles can be set to 0. For ordinary material obstacles, to avoid collisions, a safe execution distance greater than 0 can be set, such as 1 to 5 cm for ordinary material obstacles. For fragile material obstacles, to prevent causing severe damage, a safe execution distance significantly greater than 0 can be set, such as a safe execution distance greater than 5 cm for fragile material obstacles.

Of course, other classification methods for different obstacles are also possible, and this embodiment imposes no restrictions on this. For example, please refer to Table 1. In an indoor environment, the robot vacuum cleaner can, based on a first granularity, categorize different objects into items to be cleaned and obstacles; then, based on a second granularity, further subdivide the obstacles and items to be cleaned, where the first granularity is coarser than the second granularity. Table 1 shows the safe execution distances corresponding to different obstacles and the safe distances corresponding to items to be cleaned. The robot vacuum cleaner can perform cleaning tasks and/or obstacle avoidance tasks more flexibly, intelligently, and safely according to the different safe execution distances of these objects. For instance, it can perform cleaning tasks around obstacles based on their respective safe execution distances; alternatively, it can execute obstacle avoidance tasks by navigating around obstacles according to their different safe execution distances.

**Table 1**

| Semantic information of first granularity | Semantic information of second granularity | Safe execution distances |
|---|---|---|
| Obstacles | Walls | 2 cm |
| | Steps | 0 to 1 cm |
| | Carpets | 0 |
| | Porcelain, glass | Greater than 5 cm |
| | Wires, data cables | 0 to 1 cm |
| | Water dispensers | 3 cm |
| | Sofas, chairs, dining tables, beds | 1 cm |
| | Clothes on the ground | Greater than 5 cm |
| | Shoes and paper boxes scattered on the ground | 0 to 1 cm |
| | Ropes | 0 |
| | Curtains and other curtains | 0 |
| | Mirrors | 2 cm |
| | Door frames | 0 to 1 cm |
| Objects to be cleaned | Hair, dust | 0 |
| | Turbid liquid stains, footprints, solid dense residues, etc. | 0 |
| | Difficult-to-remove dirt such as oily and air-dried stains | 0 |

In some embodiments, for different obstacles, the robot vacuum cleaner can execute obstacle avoidance tasks according to different avoidance strategies. For example, these different avoidance strategies indicate different avoidance modes and/or different avoidance speeds. In this embodiment, adopting different avoidance strategies for different obstacles enhances both safety and efficiency.

In some embodiments, the robot vacuum cleaner can determine the avoidance speeds for different obstacles based on their semantic information. For instance, based on the semantic information of different obstacles, they can be classified into soft material obstacles, ordinary material obstacles, and fragile material obstacles. The avoidance speed for soft material obstacles is greater than that for ordinary material obstacles, and the avoidance speed for ordinary material obstacles is greater than that for fragile material obstacles.

For example, soft material obstacles can be cleaned in close proximity without harming the robot vacuum cleaner or the soft material obstacles themselves. Thus, the avoidance speed for soft material obstacles can be set to 5 m/min (5 meters per minute). For ordinary material obstacles, to prevent collisions, the avoidance speed can be set to 4 m/min (4 meters per minute). For fragile material obstacles, to avoid causing severe damage, the avoidance speed can be set to 2 m/min (2 meters per minute).

In some embodiments, the robot vacuum cleaner can determine different avoidance strategies for different obstacles based on their semantic information and/or physical parameters, thereby performing obstacle avoidance in a more reasonable and safe manner. The physical parameters include, but are not limited to, height, width, diameter, object shape, and so on.

For example, the different avoidance modes include a first avoidance method and/or a second avoidance method. The first avoidance method indicates navigating around the side of the obstacle, while the second avoidance strategy indicates climbing over the obstacle. In one example, the robot vacuum cleaner can pre-store a second mapping relationship, which indicates the avoidance modes corresponding to obstacles with different semantic information. The robot vacuum cleaner can determine the avoidance modes for different obstacles from this second mapping relationship based on their distinct semantic information. For instance, the second mapping relationship can be as shown in Table 2 below.

**Table 2**

| Semantic information | Obstacle avoidance method |
|---|---|
| Walls | First obstacle avoidance method |
| Steps | First obstacle avoidance method or second obstacle avoidance method |
| Carpets | Second obstacle avoidance method |
| Porcelain, glass | First obstacle avoidance method |
| Wires, data cables | First obstacle avoidance method or second obstacle avoidance method |
| Water dispenser | First obstacle avoidance method |
| Sofas, chairs, dining tables, beds | First obstacle avoidance method |
| Clothes on the ground | First obstacle avoidance method or second obstacle avoidance method |
| Shoes, paper boxes, etc. scattered on the ground | First obstacle avoidance method or second obstacle avoidance method |
| Ropes | Obstacle avoidance method |
| Thresholds | First obstacle avoidance method |

Exemplarily, a robot vacuum cleaner can determine whether the physical parameters of an obstacle meet the preset climbing condition(s) of the robot vacuum cleaner. If the physical parameters of the obstacle do not meet the preset climbing conditions of the robot vacuum cleaner, the obstacle avoidance method corresponding to the obstacle is the first obstacle avoidance method; if the physical parameters of the obstacle meet the preset climbing conditions of the robot vacuum cleaner, the obstacle avoidance method corresponding to the obstacle is the second obstacle avoidance method. The physical parameters include, but are not limited to, height, width, diameter, object shape, and so on. This embodiment realizes the determination of a reasonable and safe obstacle avoidance method based on the physical parameters of the obstacle, enabling the robot vacuum cleaner to perform obstacle avoidance tasks more flexibly, intelligently, and safely.

Taking a step as an example, if the height of the step is less than or equal to the preset climbing height of the robot vacuum cleaner, the obstacle avoidance method corresponding to the step is the second obstacle avoidance method, meaning the robot vacuum cleaner can attempt to climb over the step; conversely, if the height of the step is greater than the preset climbing height of the robot vacuum cleaner, the obstacle avoidance method corresponding to the step is the first obstacle avoidance method, meaning the robot vacuum cleaner can bypass the step.

Taking a rope as an example, if the shape of the rope conforms to the preset shape indicated by the preset climbing conditions of the robot vacuum cleaner, the obstacle avoidance method corresponding to the rope is the second obstacle avoidance method, meaning the robot vacuum cleaner can attempt to climb over the rope; conversely, if the shape of the rope does not conform to the preset shape indicated by the preset climbing conditions of the robot vacuum cleaner, the obstacle avoidance method corresponding to the rope is the first obstacle avoidance method, meaning the robot vacuum cleaner can bypass the rope. In one possible implementation, the robot vacuum cleaner can jointly determine the obstacle avoidance strategy for different obstacles based on the semantic information and physical parameters of the obstacles; for instance, it first determines candidate obstacle avoidance strategies for the obstacle based on its semantic information, and if there are multiple candidate strategies, it further selects the target obstacle avoidance strategy corresponding to the obstacle from the multiple candidate strategies based on the physical parameters of the obstacle.

In some embodiments, when the physical parameters of the obstacle meet a preset climbing condition(s) of the robot vacuum cleaner, the robot vacuum cleaner attempts to climb over the obstacle using the second obstacle avoidance method. If the first attempt to climb over is successful, the robot vacuum cleaner can mark the obstacle avoidance method corresponding to the obstacle as the second obstacle avoidance method in the semantic map; if the attempt fails, it can mark the obstacle avoidance method corresponding to the obstacle as the first obstacle avoidance method in the semantic map. During subsequent cleaning processes, the robot vacuum cleaner can perform obstacle avoidance tasks according to the marked information for the same obstacle in the semantic map, avoiding repeated attempts to climb over an unclimbable obstacle in the next cleaning process, thus improving cleaning efficiency.

In some embodiments, the robot vacuum cleaner can determine different cleaning strategies based on the semantic information of different objects, and then execute the cleaning tasks according to these different cleaning strategies. Exemplarily, the robot vacuum cleaner can pre-store a third mapping relationship, which indicates the cleaning strategies corresponding to objects with different semantic information. During the process of executing cleaning tasks, the robot vacuum cleaner can determine the cleaning strategies for different obstacles from the third mapping relationship based on the different semantic information of different objects. In this embodiment, adopting different cleaning strategies for different objects is more energy-efficient and effectively enhances cleaning capabilities, allowing the robot vacuum cleaner to perform cleaning tasks more flexibly and intelligently.

Exemplarily, the different cleaning strategies indicate different cleaning intensities. For instance, the different cleaning strategies include five types: turning off the cleaning strategy, light cleaning strategy, medium cleaning strategy, heavy cleaning strategy, and reciprocating cleaning strategy. For dust, a light cleaning strategy (light cleaning intensity) can be used; for hair, paper scraps, etc., a medium cleaning strategy (medium cleaning intensity) can be applied; for larger liquid stains, larger solid dirt, or food residues, a heavy cleaning strategy (heavy cleaning intensity) can be employed; for oily or dried stains that are difficult to remove, a reciprocating cleaning strategy can be used. For example, the aforementioned third mapping relationship can be as shown in Table 3.

Exemplarily, the reciprocating cleaning strategy instructs the robot vacuum cleaner to perform at least one of the following reciprocating cleaning actions: back-and-forth reciprocating cleaning, left-and-right reciprocating cleaning, and rotational reciprocating cleaning.

For instance, if the robot vacuum cleaner includes a flat mop, and the flat mop performs unidirectional scraping cleaning, the reciprocating cleaning strategy adopted by the robot vacuum cleaner can be back-and-forth reciprocating cleaning or left-and-right reciprocating cleaning. If the robot vacuum cleaner includes a rotating mop, where the rotating mop cleans by two mops rotating inward, the reciprocating cleaning strategy adopted by the robot vacuum cleaner can be rotational reciprocating cleaning. For other cleaning strategies, such as turning off the cleaning strategy, light cleaning strategy, medium cleaning strategy, and heavy cleaning strategy, they can be distinguished by at least one of the following: different cleaning power levels, different mop pressing pressures, different mop scrubbing frequencies, and different mop moisture levels.

For example, if the robot vacuum cleaner includes a brush and a suction port, where the brush includes a roller brush and/or a side brush, the reciprocating cleaning strategy adopted by the robot vacuum cleaner can be at least one of back-and-forth reciprocating cleaning, left-and-right reciprocating cleaning, and rotational reciprocating cleaning, with no restrictions imposed by this embodiment. For other cleaning strategies, such as turning off the cleaning strategy, light cleaning strategy, medium cleaning strategy, and heavy cleaning strategy, they can be distinguished by at least one of the following: different cleaning power levels, different suction port areas, different brush sweeping frequencies, and different brush pressing pressures.

**Table 3**

| Semantic information of first granularity | Semantic information of second granularity | Cleaning strategy |
|---|---|---|
| Obstacles | Walls | Medium cleaning strategy |
| | Steps | Medium cleaning strategy |
| | Carpets | Off cleaning strategy |
| | Porcelain, glass | Light cleaning strategy |
| | Wires, data cables | Light cleaning strategy |
| | Water dispensers | Medium cleaning strategy |
| | Sofas, chairs, dining tables, beds | Light cleaning strategy |
| | Clothes on the ground | Off cleaning strategy |
| | Shoes and paper boxes scattered on the ground | Light cleaning strategy |
| | Ropes | Off cleaning strategy |
| | Curtains and other curtains | Medium cleaning strategy |
| | Mirrors | Medium cleaning strategy |
| | Door frames | Medium cleaning strategy |
| Objects to be cleaned | Hair, dust | Light cleaning strategy |
| | Turbid liquid stains, footprints, solid dense residues, etc. | Heavy cleaning strategy |
| | Difficult-to-remove dirt such as oily and air-dried stains | Reciprocating cleaning strategy |

For objects with a safe execution distance greater than 0 and a cleaning strategy other than "turn off cleaning," the robot vacuum cleaner can perform cleaning tasks around the object according to the corresponding cleaning strategy based on the safe execution distance of different objects. For example, for a wall, as shown in Table 1, the safe execution distance is 2 cm, and as shown in Table 3, the cleaning strategy is medium cleaning; then the robot vacuum cleaner can maintain a 2 cm distance from the wall and clean with medium cleaning intensity. For another example, for glass, as shown in Table 1, the safe execution distance is greater than 5 cm, and as shown in Table 3, the cleaning strategy is light cleaning; then the robot vacuum cleaner can maintain a 2 cm distance from the glass and clean with light cleaning intensity.

In some embodiments, the robot vacuum cleaner is equipped with a visual sensor. Here, an exemplary explanation is provided for the reciprocating cleaning strategy among the different cleaning strategies. When the robot vacuum cleaner cleans an object to be cleaned at any cleaning position according to the reciprocating cleaning strategy, it can repeatedly perform the following steps until there are no objects to be cleaned at that position: after cleaning the object at the cleaning position, the visual sensor is used to capture an image of the cleaning position, and based on the image, it identifies whether there are any residual objects to be cleaned at that position. If so, the robot vacuum cleaner is controlled to repeatedly clean the object at the cleaning position. In this embodiment, for objects that are difficult to thoroughly clean in a single pass, the reciprocating cleaning strategy can be used for repeated cleaning, effectively enhancing the cleaning capability of the robot vacuum cleaner.

Exemplarily, when the robot vacuum cleaner cleans an object to be cleaned at any cleaning position according to the reciprocating cleaning strategy, to reduce the number of reciprocating sweeps, the cleaning intensity used by the robot vacuum cleaner in a non-initial cleaning process can be higher than the cleaning intensity used in the previous cleaning process, thereby improving cleaning efficiency.

Exemplarily, the robot vacuum cleaner is equipped with at least two visual sensors. The field of view directions of the at least two visual sensors satisfy the following: the field of view direction of one visual sensor is the same as the cleaning direction of the robot vacuum cleaner, while the field of view direction of another visual sensor is opposite to the cleaning direction. When the robot vacuum cleaner cleans an object to be cleaned at any cleaning position according to the reciprocating cleaning strategy, the cleaning directions of two consecutive cleaning processes are opposite, and after completing the cleaning, the visual sensor with a field of view direction opposite to the cleaning direction is used to capture the image. This allows the robot vacuum cleaner to detect whether there are any residual objects to be cleaned at the same cleaning position without needing to turn the head of the machine, thereby improving detection efficiency and cleaning efficiency.

For example, with reference to FIG. 8. The robot vacuum cleaner is equipped with a front-facing sensor and a rear-facing sensor. When the robot vacuum cleaner cleans an object to be cleaned at any cleaning position according to the reciprocating cleaning strategy, for instance, the first cleaning is performed in a first cleaning direction, and after the cleaning is completed, the rear-facing sensor is used to capture an image. If it is determined based on the image captured by the rear-facing sensor that there are residual objects to be cleaned at the cleaning position, cleaning is performed in a second cleaning direction. The second cleaning direction is opposite to the first cleaning direction, and after the cleaning is completed, the front-facing sensor is used to capture an image. Similarly, if it is determined based on the image captured by the front-facing sensor that there are residual objects to be cleaned at the cleaning position, cleaning is performed in the first cleaning direction, and so on. Thus, the robot vacuum cleaner does not need to turn its head during the reciprocating cleaning process, improving detection efficiency and cleaning efficiency.

Of course, the use of visual sensors to detect whether there are residual objects to be cleaned is not limited to when the robot vacuum cleaner is using the reciprocating cleaning strategy. Visual sensors can also be used to detect whether there are residual objects to be cleaned when other cleaning strategies are employed.

In some embodiments, after determining the cleaning strategy for an object to be cleaned at a specific cleaning position, the robot vacuum cleaner cleans the object at that position according to the cleaning intensity indicated by the determined cleaning strategy. After the cleaning is completed, a visual sensor is used to capture an image of the cleaning position. The robot vacuum cleaner identifies, based on the image, whether there are any residual objects to be cleaned at the cleaning position. If there are, the cleaning strategy corresponding to the object to be cleaned is modified to a cleaning strategy with higher cleaning intensity, and the object at the cleaning position is cleaned again according to the modified cleaning strategy. Additionally, the mapping relationship between the semantic information of the object to be cleaned and the new cleaning strategy is saved, so that the next time a cleaning task is performed, the object can be cleaned according to the new cleaning strategy, thereby reducing the number of cleaning passes and improving cleaning efficiency.

In some embodiments, the different cleaning strategies indicate different cleaning intensities. The different cleaning intensities indicate differences in at least one of the following for the robot vacuum cleaner: the cleaning power of the robot vacuum cleaner and the execution parameters of the robot vacuum cleaner's execution system. For example, the execution parameters of the robot vacuum cleaner's execution system include at least one of the following: the area of the suction port of the robot vacuum cleaner, the sweeping frequency of the robot vacuum cleaner's brush, the scrubbing frequency of the robot vacuum cleaner's mop, the pressing pressure of the robot vacuum cleaner's brush or mop, and the moisture level of the robot vacuum cleaner's mop. This embodiment adjusts at least one of the aforementioned factors of the robot vacuum cleaner, enabling the robot vacuum cleaner to clean different objects with different cleaning strategies, thereby enhancing the flexibility and intelligence of the robot vacuum cleaner's cleaning capabilities.

For the vacuuming method, when the suction port area is constant, the cleaning power of the robot vacuum cleaner is positively correlated with the cleaning intensity; the higher the cleaning power of the robot vacuum cleaner, the stronger the cleaning intensity. When the cleaning power is constant, the suction port area of the robot vacuum cleaner is negatively correlated with the cleaning intensity; the smaller the suction port area of the robot vacuum cleaner, the stronger the cleaning intensity.

For the method of cleaning with a brush, the cleaning power of the robot vacuum cleaner, the sweeping frequency of the brush, and the pressing pressure of the brush are each positively correlated with the cleaning intensity. When other factors remain constant, the higher the cleaning power of the robot vacuum cleaner, the stronger the cleaning intensity; the higher the sweeping frequency of the brush, the stronger the cleaning intensity; the greater the pressing pressure of the brush, the stronger the cleaning intensity; and vice versa.

For the method of scrubbing with a mop, the cleaning power of the robot vacuum cleaner, the scrubbing frequency of the mop, the pressing pressure of the mop, and the moisture level of the mop are each positively correlated with the cleaning intensity. When other factors remain constant, the higher the cleaning power of the robot vacuum cleaner, the stronger the cleaning intensity; the higher the scrubbing frequency of the mop, the stronger the cleaning intensity; the greater the pressing pressure of the mop, the stronger the cleaning intensity; the higher the moisture level of the mop, the stronger the cleaning intensity.

Herein, a schematic explanation is provided regarding the variation of the suction port area: In one possible implementation, the vacuuming component of the robot vacuum cleaner includes a suction port and a movable baffle that cooperates with the suction port. The execution parameter of the vacuuming component is related to the movement of the movable baffle, where the execution parameter is the area of the suction port. The movement of the movable baffle obstructs the suction port, thereby altering its area.

Exemplarily, the movable baffle can be moved manually. For instance, the movable baffle may have a textured surface, allowing it to be moved by the friction between a hand and the texture; alternatively, the movable baffle may have a notch, and pressing the notch can drive the movement of the movable baffle.

Exemplarily, the robot vacuum cleaner further includes a driving device used to drive the movement of the movable baffle.

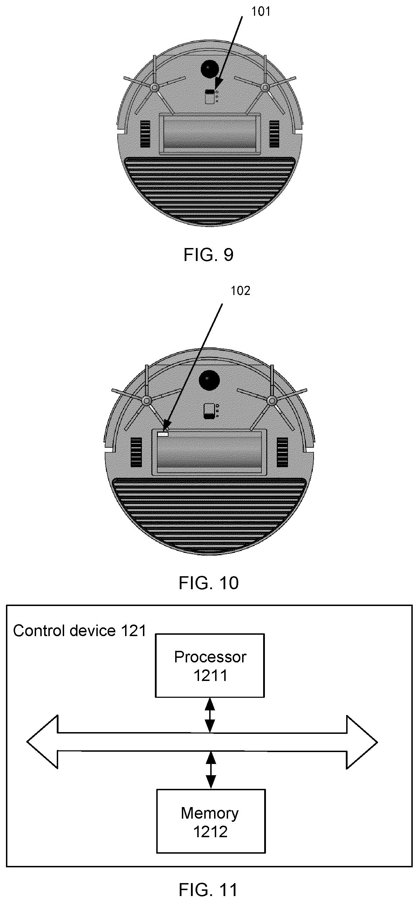

In one example, the driving device can be a manual driving device. For instance, the driving device includes a mechanical switch 101 used to move the movable baffle to different positions. For example, please refer to FIG. 9, which shows a mechanical switch 101 capable of moving the movable baffle to three different positions, each corresponding to one of the three gears of the mechanical switch 101. By toggling the mechanical switch 101 to different gears, the movable baffle can be driven to move up or down to the position corresponding to that gear, thereby adjusting the size of the suction port. The three gears of the mechanical switch 101 include a minimum suction gear mechanical switch, a standard suction gear mechanical switch, and a maximum suction gear mechanical switch. Among these, the minimum suction gear mechanical switch indicates the largest suction port area, with the lowest corresponding suction port airflow speed, making this gear suitable for light daily dust cleaning (corresponding to the light cleaning strategy). The standard suction gear mechanical switch indicates a suction port area smaller than that of the minimum suction gear mechanical switch, with a medium corresponding suction port airflow speed, suitable for general daily household cleaning (corresponding to the medium cleaning strategy). The maximum suction gear mechanical switch indicates the smallest suction port area among the three, smaller than that of the standard suction gear mechanical switch, with the highest corresponding suction port airflow speed, making this gear suitable for heavy daily floor cleaning of significant dirt (corresponding to the heavy cleaning strategy).

In another example, the driving device can be an electric driving device. The driving device includes a motor and a transmission mechanism. The motor drives the movable baffle to move through the transmission mechanism. The robot vacuum cleaner can control the motor to rotate based on the determined cleaning strategy for the object to be cleaned, thereby enabling the motor to drive the movable baffle to the corresponding position via the transmission mechanism, so that the robot vacuum cleaner can clean the object using the appropriate cleaning strategy.

In some embodiments, the vacuuming component of the robot vacuum cleaner includes a suction port and multiple detachable baffles that cooperate with the suction port. The multiple detachable baffles result in different execution parameters for the vacuuming component; the execution parameters of the vacuuming component are related to the different detachable baffles, where the execution parameter is the obstructed area of the suction port. The area of the suction port changes by replacing different detachable baffles.

In some embodiments, with reference to FIG. 10: the robot vacuum cleaner also includes an airspeed sensor 102 positioned near the suction port. During the execution of the cleaning task, the robot vacuum cleaner can obtain the actual airflow speed of the suction port as collected by the airspeed sensor 102. Then, if the actual airflow speed is lower than the reference airflow speed indicated by the current cleaning strategy, the robot vacuum cleaner adjusts its cleaning power with the goal of increasing the airflow speed to the reference airflow speed. This embodiment achieves the use of airflow speed as a control target, dynamically adjusting the cleaning power of the robot vacuum cleaner to ensure no loss of suction during operation, thereby guaranteeing cleaning effectiveness.

The various technical features in the above embodiments can be arbitrarily combined as long as there is no conflict or contradiction between the combinations of features. Therefore, any combination of the various technical features in the above embodiments also falls within the scope of disclosure of this specification.

Accordingly, please refer to FIG. 11. The embodiment of this application also provides a control device 121 for a robot vacuum cleaner, including one or more processors 1211 and a memory 1212 for storing executable instructions for the processors. The one or more processors 1211, individually or collectively, execute the executable instructions to: determine the semantic information of different objects located on the movement path; determine different safe execution distances for the different objects based on their semantic information; and control the robot vacuum cleaner to perform cleaning tasks and/or obstacle avoidance tasks according to the different safe execution distances of the different objects.

The processor 1211 executes the executable instructions included in the memory 1212. The processor 1211 can be a Central Processing Unit (CPU), or it can be other general-purpose processors, a Digital Signal Processor (DSP), an Application Specific Integrated Circuit (ASIC), a Field-Programmable Gate Array (FPGA), or other programmable logic devices, discrete gate or transistor logic devices, discrete hardware components, etc. A general-purpose processor can be a microprocessor, or the processor can also be any conventional processor, etc.

The memory 1212 stores executable instructions for the control method. The memory 1212 may include at least one type of storage medium, such as flash memory, hard disk, multimedia card, card-type memory (e.g., SD or DX memory, etc.), Random Access Memory (RAM), Static Random Access Memory (SRAM), Read-Only Memory (ROM), Electrically Erasable Programmable Read-Only Memory (EEPROM), Programmable Read-Only Memory (PROM), magnetic storage, magnetic disk, optical disk, and so on. Additionally, the device may collaborate with a network storage device that performs the storage function of the memory via a network connection. The memory 1212 may be an internal storage unit of the control device 121, such as a hard disk or memory of the control device 121. The memory 1212 may also be an external storage device of the control device 121, such as a plug-in hard disk, Smart Media Card (SMC), Secure Digital (SD) card, Flash Card, etc., equipped on the control device 121. Furthermore, the memory 1212 may include both an internal storage unit and an external storage device of the control device 121. The memory 1212 is used to store the computer program 55 as well as other programs and data required by the device. The memory 1212 may also be used to temporarily store data that has been output or is about to be output.

In some embodiments, the different objects include different obstacles; the different obstacles are classified based on the semantic information of the different objects. The processor 1211 is specifically configured to execute the obstacle avoidance tasks for different obstacles according to different obstacle avoidance strategies.

In some embodiments, the different obstacle avoidance strategies indicate different obstacle avoidance modes and/or different obstacle avoidance speeds.

In some embodiments, the different obstacle avoidance modes are determined based on the semantic information and/or physical parameters of the different obstacles, and the different obstacle avoidance speeds are determined based on the semantic information of the different obstacles.

In some embodiments, the different obstacle avoidance modes include a first obstacle avoidance method: the first obstacle avoidance method instructs the robot vacuum cleaner to detour around the side of the obstacle. If the physical parameters of the obstacle do not meet the preset climbing conditions of the robot vacuum cleaner, the obstacle avoidance method corresponding to the obstacle is the first obstacle avoidance method. The different obstacle avoidance modes also include a second obstacle avoidance method: the second obstacle avoidance strategy instructs the robot vacuum cleaner to climb over the obstacle. If the physical parameters of the obstacle meet the preset climbing conditions of the robot vacuum cleaner, the obstacle avoidance method corresponding to the obstacle is the second obstacle avoidance method.

In some embodiments, the different safe execution distances for the different objects are determined from a pre-stored first mapping relationship based on the semantic information of the different objects, where the first mapping relationship indicates the different safe execution distances corresponding to objects with different semantic information.

In some embodiments, the different objects include obstacles and objects to be cleaned. The obstacles and objects to be cleaned are classified based on the semantic information of the different objects. The safe execution distance for objects to be cleaned is 0, while the safe execution distance for obstacles is greater than or equal to 0.

In some embodiments, the different obstacles include obstacles made of soft materials, obstacles made of ordinary materials, and obstacles made of fragile materials. The different materials of the obstacles are classified based on the semantic information of the different obstacles. The safe execution distance for obstacles made of soft materials is less than that for obstacles made of ordinary materials, and the safe execution distance for obstacles made of ordinary materials is less than that for obstacles made of fragile materials.

In some embodiments, the processor 1211 is specifically configured to execute the cleaning tasks according to different cleaning strategies. The different cleaning strategies are determined based on the semantic information of the different objects.

In some embodiments, the different cleaning strategies indicate different cleaning intensities.

In some embodiments, the different cleaning intensities indicate differences in the cleaning power of the robot vacuum cleaner and/or the area of the suction port of the robot vacuum cleaner.

In some embodiments, the robot vacuum cleaner further includes a movable baffle that cooperates with the suction port. The area of the suction port is related to the movement of the movable baffle. Alternatively, the robot vacuum cleaner further includes multiple detachable baffles that cooperate with the suction port, where the multiple detachable baffles obstruct the suction port to different extents; the area of the suction port is related to the different detachable baffles.

In some embodiments, the robot vacuum cleaner further includes a driving device for driving the movement of the movable baffle.

In some embodiments, the driving device includes a mechanical switch used to move the movable baffle to different positions; alternatively, the driving device includes a motor and a transmission mechanism, where the motor drives the movable baffle to move through the transmission mechanism.

In some embodiments, the robot vacuum cleaner further includes an airspeed sensor positioned near the suction port. The processor 1211 is further configured to, during the execution of the cleaning task, obtain the actual airflow speed of the suction port as collected by the airspeed sensor. If the actual airflow speed is lower than the reference airflow speed indicated by the current cleaning strategy, the cleaning power of the robot vacuum cleaner is adjusted with the goal of increasing the airflow speed to the reference airflow speed.

In some embodiments, the robot vacuum cleaner is equipped with a visual sensor. The different cleaning strategies include at least a reciprocating cleaning strategy. The objects include items to be cleaned. The processor 1211 is specifically configured to, when cleaning an item to be cleaned at any cleaning position according to the reciprocating cleaning strategy, repeatedly perform the following steps until there are no items to be cleaned at that position: after cleaning the item at the cleaning position, use the visual sensor to capture an image of the cleaning position; based on the image, identify whether there are any residual items to be cleaned at the cleaning position; if so, control the robot vacuum cleaner to repeatedly clean the item at the cleaning position.

In some embodiments, when the robot vacuum cleaner cleans an item to be cleaned at any cleaning position according to the reciprocating cleaning strategy, the cleaning intensity used by the robot vacuum cleaner in a non-initial cleaning process is higher than the cleaning intensity used in the previous cleaning process.

In some embodiments, the robot vacuum cleaner is equipped with at least two visual sensors. The field of view directions of the at least two visual sensors satisfy the following: the field of view direction of one visual sensor is the same as the cleaning direction of the robot vacuum cleaner, while the field of view direction of another visual sensor is opposite to the cleaning direction. When the robot vacuum cleaner cleans an item to be cleaned at any cleaning position according to the reciprocating cleaning strategy, the cleaning directions of two consecutive cleaning processes are opposite, and after the cleaning is completed, the visual sensor with a field of view direction opposite to the cleaning direction is used to capture the image.

In some embodiments, before determining the semantic information of different objects located on the movement path, the processor 1211 is further configured to receive information about items to be cleaned; and plan the movement path of the robot vacuum cleaner based on the area to be cleaned indicated by the information about items to be cleaned. The area to be cleaned is determined based on a received first touch trajectory, which includes at least one of the following: a smearing trajectory, a pressing trajectory, or a sliding operation trajectory in the form of a closed sliding trajectory.

The various embodiments described herein can be implemented using a computer-readable medium such as computer software, hardware, or any combination thereof. For hardware implementation, the embodiments described here can be implemented by using at least one of the following: Application Specific Integrated Circuits (ASIC), Digital Signal Processors (DSP), Digital Signal Processing Devices (DSPD), Programmable Logic Devices (PLD), Field Programmable Gate Arrays (FPGA), processors, controllers, microcontrollers, microprocessors, or electronic units designed to perform the functions described herein. For software implementation, embodiments such as procedures or functions can be implemented with separate software modules that allow the execution of at least one function or operation. The software code can be implemented by a software application (or program) written in any suitable programming language, and the software code can be stored in memory and executed by a controller.

The specific implementation process of the functions and roles of each unit in the above device is detailed in the implementation process of the corresponding steps in the above method, and will not be repeated herein.

Accordingly, some embodiments of this application also provide a robot vacuum cleaner, including:
A body;
A power system, disposed within the body, used to provide power to the robot vacuum cleaner; and
The aforementioned control device, disposed within the body.

For the relevant description of the robot vacuum cleaner, please refer to the description of the embodiments shown in FIG. 3, which will not be repeated herein.

Accordingly, with reference to FIG. 1, the embodiment of this application also provides a control system, including a robot vacuum cleaner and a terminal.

Exemplarily, the terminal is used to display an environmental map on an interactive interface; in response to a first touch operation received on the interactive interface, generate a first touch trajectory. The first touch trajectory may include at least one of the following: a smearing trajectory, a pressing trajectory, or a sliding operation trajectory in the form of a closed sliding trajectory. Based on the first touch trajectory and the environmental map, determine the area to be cleaned in the environment; and control the robot vacuum cleaner to perform cleaning tasks in the environment according to the area to be cleaned.

The terminal is further used to determine the area to be cleaned in the environment based on the regions covered by several circles centered on the first touch trajectory (e.g., a smearing trajectory) within the environmental map. The radius of the circles is determined based on a first instruction.

The terminal is further used to obtain several circles centered on the smearing trajectory and fit these circles to form a closed shape; based on the area covered by the closed shape in the environmental map, determine the area to be cleaned in the environment.

The terminal is also used to obtain the current position of the robot vacuum cleaner, determine a movement path based on the current position of the robot vacuum cleaner and the area to be cleaned, and control the robot vacuum cleaner to move along the movement path. The movement path includes at least: a first movement path, which represents the path from the current position of the robot vacuum cleaner to the area to be cleaned; and/or a second movement path, which represents the path of the robot vacuum cleaner while performing cleaning tasks within the area to be cleaned.

The terminal, when used to control the robot vacuum cleaner to move along the movement path, is specifically configured to: when the robot vacuum cleaner receives the area to be cleaned, under a first condition, control the robot vacuum cleaner to move from its current position to the area to be cleaned via the first movement path; or under a second condition, prioritize controlling the robot vacuum cleaner to move from its current position to the area to be cleaned via the first movement path; or under a third condition, prioritize controlling the robot vacuum cleaner to continue executing its current basic task.

The terminal is further used to determine the semantic information of different objects located on the movement path; determine different safe execution distances for the different objects based on their semantic information; and control the robot vacuum cleaner to perform cleaning tasks and/or obstacle avoidance tasks according to the different safe execution distances of the different objects.

In some exemplary embodiments, a non-transitory computer-readable storage medium including instructions is also provided, such as a memory including instructions, where the instructions can be executed by a processor of a device to perform the above method. For example, the non-transitory computer-readable storage medium can be ROM, Random Access Memory (RAM), CD-ROM, magnetic tape, floppy disk, optical data storage device, and the like.

A non-transitory computer-readable storage medium, when the instructions in the storage medium are executed by a processor of a terminal, enables the terminal to perform the above method.

It should be noted that, in this document, relational terms such as "first" and "second" are merely used to distinguish one entity or operation from another entity or operation, and do not necessarily require or imply any actual relationship or order between these entities or operations. The terms "include," "comprise," or any other variations thereof are intended to cover a non-exclusive inclusion, such that a process, method, article, or device that includes a series of elements not only includes those elements but also includes other elements not explicitly listed, or further includes elements inherent to such process, method, article, or device. In the absence of additional limitations, an element defined by the phrase "including a..." does not exclude the presence of other identical elements in the process, method, article, or device that includes the element.

The methods and devices provided by the embodiments of this application have been described in detail above. Specific examples have been used herein to illustrate the principles and implementations of this application. The descriptions of the above embodiments are only intended to help understand the methods and core ideas of this application; meanwhile, for a person of ordinary skill in the art, based on the ideas of this application, there may be changes in the specific implementations and application scope. In summary, the content of this specification should not be construed as a limitation on this application.

## Claims

1. A robot vacuum cleaner controlling method applied to a robot vacuum cleaner, **characterized in that** the method comprises:
determining semantic information of different objects located on a movement path;
determining different safe execution distances for the different objects based on the semantic information; and
controlling the robot vacuum cleaner to perform at least one of a cleaning task or an obstacle avoidance task based on the different safe execution distances of the different objects.

2. The method according to claim 1, **characterized in that** the different objects comprise different obstacles; the different obstacles are classified based on the semantic information of the different objects; and
the performing of the obstacle avoidance task comprises:
for different obstacles, executing the obstacle avoidance task based on different obstacle avoidance strategies.

3. The method according to claim 2, **characterized in that** the different obstacle avoidance strategies indicate at least different obstacle avoidance modes or different obstacle avoidance speeds.

4. The method according to claim 3, **characterized in that** the different obstacle avoidance modes are determined based on at least one of the semantic information or a physical parameter of the different obstacles; and
the different obstacle avoidance speeds are determined based on the semantic information of the different obstacles.

5. The method according to claim 4, **characterized in that** the different obstacle avoidance modes comprise a first obstacle avoidance mode; the first obstacle avoidance mode instructs to detour from a side of an obstacle; and
upon determining that the physical parameter of the obstacle does not meet a preset climbing condition of the robot vacuum cleaner, making an obstacle avoidance mode corresponding to the obstacle as the first obstacle avoidance mode.

6. The method according to claim 4, **characterized in that** the different obstacle avoidance modes comprise a second obstacle avoidance mode; the second obstacle avoidance mode instructs to climb over an obstacle; and
upon determining that the physical parameter of the obstacle meet a preset climbing condition of the robot vacuum cleaner, making an obstacle avoidance mode corresponding to the obstacle as the second obstacle avoidance mode.

7. The method according to any one of claims 1 to 6, **characterized in that** the different safe execution distances of the different objects are determined according to a pre-stored first mapping relationship based on the semantic information of the different objects, wherein the first mapping relationship indicates the different safe execution distances corresponding to objects with different semantic information.

8. The method according to any one of claims 1 to 7, **characterized in that** the different objects comprises obstacles and an object to be cleaned; the obstacles and the object to be cleaned are determined based on the semantic information of the different objects;
the safe execution distance of the object to be cleaned is 0; and
the safe execution distances of the obstacles are greater than or equal to 0.

9. The method according to claim 8, **characterized in that** different obstacles comprise obstacles made of soft materials, obstacles made of ordinary materials, and obstacles made of fragile materials; materials of the different obstacles are classified based on the semantic information of the different obstacles;
the safe execution distances of the obstacles made of the soft materials are less than the safe execution distances of the obstacles made of the ordinary materials, and the safe execution distances of the obstacles made of the ordinary materials are less than the safe execution distances of the obstacles made of the fragile materials.

10. The method according to any one of claims 1 to 9, **characterized in that** the performing of the cleaning task comprises:
performing the cleaning task based on different cleaning strategies; wherein the different cleaning strategies are determined based on the semantic information of the different objects.

11. The method according to claim 10, **characterized in that** the different cleaning strategies indicate different cleaning intensities.

12. The method according to claim 11, **characterized in that** the different cleaning intensities indicate at least different cleaning powers of the robot vacuum cleaner or different execution parameters of an execution system of the robot vacuum cleaner.

13. The method according to claim 12, **characterized in that** the execution system comprises at least one of a dry cleaning component, a vacuuming component, or a wet cleaning component.

14. The method according to claim 13, **characterized in that** the vacuuming component comprises a suction port and a movable baffle cooperating with the suction port; an execution parameter of the vacuuming component is related to a movement of the movable baffle, wherein the execution parameter is an area of the suction port; or
the vacuuming component comprises a suction port and a plurality of detachable baffles cooperating with the suction port, the plurality of detachable baffles resulting in different values of an execution parameter of the vacuuming component; the execution parameter of the vacuuming component is related to different detachable baffles, wherein the execution parameter is a blocked area of the suction port.

15. The method according to claim 14, **characterized in that** the robot vacuum cleaner further comprises a driving device configured to drive the movable baffle(s) to move.

16. The method according to claim 15, **characterized in that** the driving device comprises a mechanical switch configured to drive the movable baffle(s) to move to different positions; or
the driving device comprises a motor and a transmission mechanism, wherein the motor drives, via the transmission mechanism, the movable baffle(s) to move.

17. The method according to any one of claims 10 to 16, **characterized in that** the robot vacuum cleaner further comprises an airspeed sensor disposed near the suction port; and the method further comprises:
during performing the cleaning task, obtaining an actual airspeed at the suction port collected by the airspeed sensor;
upon determining that the actual airspeed is lower than a reference airspeed indicated by a current cleaning strategy, adjusting a cleaning power of the robot vacuum cleaner to increase the airspeed to the reference airspeed.

18. The method according to any one of claims 10 to 17, **characterized in that** the robot vacuum cleaner is equipped with a visual sensor; the different cleaning strategies comprise at least a reciprocating cleaning strategy; the objects comprises objects to be cleaned; and
the performing of the cleaning task based on the different cleaning strategies comprises:
during cleaning the objects to be cleaned at a cleaning position based on the reciprocating cleaning strategy, repeatedly performing the following steps until there is no object to be cleaned at the cleaning position,
after cleaning the objects to be cleaned at the cleaning position, using the visual sensor to capture an image of the cleaning position,
identifying, based on the image, whether there is a remaining object to be cleaned at the cleaning position, and
if so, controlling the robot vacuum cleaner to repeatedly clean the objects to be cleaned at the cleaning position.

19. The method according to claim 18, **characterized in that** when the robot vacuum cleaner cleans the object to be cleaned at the cleaning position according to the reciprocating cleaning strategy, a cleaning intensity adopted by the robot vacuum cleaner during a non-initial cleaning process is higher than a cleaning intensity adopted in a preceding cleaning process.

20. The method according to claim 19, **characterized in that** the robot vacuum cleaner is equipped with at least two visual sensors;
fields of view directions of the at least two visual sensors satisfy: a field of view direction of a visual sensor is the same as a cleaning direction of the robot vacuum cleaner, while a field of view direction of another visual sensor is opposite to the cleaning direction, wherein
when the robot vacuum cleaner cleans the object to be cleaned at the cleaning position according to the reciprocating cleaning strategy, cleaning directions of two adjacent cleaning processes are opposite, and after the cleaning task is completed, the visual sensor whose field of view direction is opposite to the cleaning direction is used to capture the image.

21. The method according to any one of claims 1 to 20, **characterized in that**, before determining the semantic information of the different objects located on the movement path, the method further comprises:
receiving cleaning information;
planning the movement path of the robot vacuum cleaner based on an area to be cleaned indicated by the cleaning information, wherein the area to be cleaned is determined according to a received first touch trajectory, and the first touch trajectory comprises at least one of a smearing trajectory, a pressing trajectory, or a sliding operation trajectory as a closed sliding trajectory.

22. A robot vacuum cleaner controlling method applied to a terminal, **characterized in that** the method comprises:
displaying an environment map on an interactive interface;
in response to a first touch operation received on the interactive interface, generating a first touch trajectory;
determining an area to be cleaned in an environment based on the first touch trajectory and the environment map; and
controlling the robot vacuum cleaner to perform a cleaning task in the environment based on the area to be cleaned.

23. The method according to claim 22, **characterized in that** the determining of the area to be cleaned in the environment based on the first trajectory and the environment map comprises:
determining the area to be cleaned in the environment based on a region covered by a plurality of circles centered on the first touch trajectory in the environment map, wherein radii of the circles are determined based on a first instruction.

24. The method according to claim 23, **characterized in that** the determining of the area to be cleaned in the environment comprises:
obtaining the plurality of circles centered on the first touch trajectory and fitting the plurality of circles to obtain a closed shape; and
determining the area to be cleaned in the environment based on a region covered by the closed shape in the environment map.

25. The method according to claim 22, **characterized in that** the controlling of the robot vacuum cleaner to perform the cleaning task in the environment based on the area to be cleaned comprises:
obtaining a current position of the robot vacuum cleaner;
determining a movement path based on the current position of the robot vacuum cleaner and the area to be cleaned; and
controlling the robot vacuum cleaner to move along the movement path.

26. The method according to claim 25, **characterized in that** the movement path comprises at least one of:
a first movement path, representing a path from the current position of the robot vacuum cleaner to the area to be cleaned; or
a second movement path, representing a path of the robot vacuum cleaner while performing the cleaning task within the area to be cleaned.

27. The method according to claim 26, **characterized in that** the controlling of the robot vacuum cleaner to move along the movement path comprises:
upon receiving the area to be cleaned by the robot vacuum cleaner:
under a first condition, controlling the robot vacuum cleaner to move from the current position to the area to be cleaned via the first movement path; or
under a second condition, prioritizing to control the robot vacuum cleaner to move from the current position to the area to be cleaned via the first movement path;
or
under a third condition, prioritizing to control the robot vacuum cleaner to continue executing a current basic task.

28. The method according to any one of claims 25 to 27, **characterized in that** the method further comprises:
determining semantic information of different objects located on the movement path;
determining different safe execution distances for the different objects based on the semantic information of the different objects; and
controlling the robot vacuum cleaner to perform at least one of a cleaning task or an obstacle avoidance task based on the different safe execution distances of the different objects.

29. A control device for a robot vacuum cleaner, **characterized in that** the control device comprises:
one or more processors;
a memory for storing executable instructions for the processor, wherein
the one or more processors, individually or collectively, execute the executable instructions to perform the method according to any one of claims 1 to 21.

30. A robot vacuum cleaner, **characterized in that** the robot vacuum cleaner comprises:
a body;
a power system, disposed within the body, configured to provide power to the robot vacuum cleaner; and
a control device as set forth in claim 29, disposed within the body.

31. A control system, **characterized in that** the control system comprises the robot vacuum cleaner as set forth in claim 30 and a terminal, wherein
the terminal is configured to execute the method according to any one of claims 22 to 28.

32. A computer-readable storage medium, **characterized in that** the computer-readable storage medium stores executable instructions, and when the executable instructions are executed by a processor, the method according to any one of claims 1 to 28 is implemented.
